# EUROPÄISCHE PATENTSCHRIFT

(11) **EP 1 364 717 B1**
(45) Veröffentlichungstag und Bekanntmachung des Hinweises auf die Patenterteilung: **03.01.2007**
(21) Anmeldenummer: 03011672.7
(22) Anmeldetag: 23.05.2003
(51) Int. Cl.: B04B 1/20

(54) **Dekantierzentrifuge für die Gewinnung von Frucht- oder Gemüsesäften mit einer Förderschnecke zur diskontinuierlichen Förderung**
Decanter centrifuge for extracting fruit- or vegetable juices having a worm-conveyor for discontinous transport
Centrifugeuse décanteuse d'extraction de jus de fruits ou de légumes avec un convoyeur pour le transport discontinu

(30) Priorität: 24.05.2002 DE 20208119 U
(43) Veröffentlichungstag der Anmeldung: 26.11.2003
(73) Patentinhaber: Hiller GmbH, 84137 Vilsbiburg (DE)
(72) Erfinder: Haider, Günter, 84137 Vilsbiburg (DE); Wagenbauer, Robert, 84189 Wurmsham (DE)
(74) Vertreter: Gustorf, Gerhard

(56) Entgegenhaltungen:
- WO-A-02/38278
- WO-A-97/23295
- DE-A1- 3 301 099

## Beschreibung

Die Erfindung betrifft eine Dekantierzentrifuge für die Gewinnung von Frucht- oder Gemüsesäften mit einer in einem Rotor drehbaren Förderschnecke, deren Wellenkörper mit Schneckenwendeln bestückt ist, und mit Mitteln für den Zulauf des aufzuschließenden Gutes sowie mit Austragsöffnungen für die flüssige Phase und den Feststoff.

Die einfachste Möglichkeit zur Gewinnung von Fruchtsäften besteht in der Verwendung von Spindelpressen oder Bandpressen, wie sie beispielsweise bei der Traubenverarbeitung für die Weinerzeugung lange üblich waren. Diese Technik ist durch den Einsatz von Dekantierzentrifugen verdrängt worden, da mit diesen eine kontinuierliche Erzeugung der Säfte aus Früchten und Gemüse möglich ist und damit eine höhere Produktionsleistung erzielt werden kann.

Die bisher verwendeten Dekantierzentrifugen der eingangs umrissenen Bauart sind mit einer Förderschnecke ausgerüstet, deren Wellenkörper eine durchgehende, ununterbrochene Schneckenwendel aufweist, was den Nachteil hat, daß bei Gleichstrombetrieb und auch bei Gegenstrombetrieb ein fester, aus dem Fruchtfleisch gebildeter Kuchen zum Austragsende gedrückt wird, der nach kurzer Zeit nicht mehr durchlässig ist, wodurch die Saftausbeute verringert wird und insgesamt nicht zufriedenstellend ist.

Eine Dekantierzentrifuge des oben angegebenen Typs ist Gegenstand der WO 02/38278. Diese hat eine Förderschnecke, bei der auf einem Teil des Schneckenkörpers die Schneckenwendel durch Aussparungen unterbrochen ist, in denen schräg gestellte Blattsegmente angebracht sind, deren Höhe geringer als die Höhe der Schneckenwendel ist. Diese Blattsegmente dienen dazu, dem aufzuschließenden Gut unterschiedliche axiale Geschwindigkeiten in der Durchlaufrichtung zu erteilen, um dadurch eine bessere Durchmischung des Gutes zu erzielen.

Aus WO 97/23295 ist eine Dekantierzentrifuge bekannt, bei der die Schneckenwendel der Förderschnecke auf dem größen Teil ihrer Länge nicht durchgängig ist, sondern aus schraubenlinienartig angeordneten Schaufeln besteht, die auch hier das aufzuschließende Gut in ein und derselben Richtung vorwärts fördern.

In DE-A 33 01 099 ist eine Vollmantelzentrifuge beschrieben und dargestellt, bei der die Schneckenwendel durch radiale Einschnitte kammartig ausgebildet sind.

Der Erfindung liegt die Aufgabe zugrunde, eine Dekantierzentrifuge für die Gewinnung von Frucht- und Gemüsesäften zur Verfügung zu stellen, bei der die Ausbeute an Saft erheblich gesteigert werden kann.

Diese Aufgabe wird durch eine Dekantierzentrifuge mit den im Anspruch 1 angegebenen Merkmalen gelöst.

Diese Lösung hat den wesentlichen Vorteil, daß die einzelnen Paddel das aufzuschließende Fruchtfleisch bei seinem Weg zur Austragsöffnung in kurzen Abständen immer wieder in die entgegengesetzte Richtung rückwärts fördern, wodurch die Verweilzeit in der Zentrifuge länger als bei bisher üblichen Schneckenzentrifugen ist. Bei dieser Umschichtung des aufzuschließenden Gutes wird der sich möglicherweise immer noch an der Rotorwand bildende Kuchen wieder aufgerissen und einem erneuten Trennvorgang unterworfen, was sich günstig auf die Saftausbeute auswirkt.

Für die diskontinuierliche Pilgerschrittförderung können die Paddel unter einem gleichbleibenden Winkel zu den Radialebenen an ihren Eintrittskanten angestellt sein, sie können aber auch von Paddel zu Paddel in Umfangsrichtung alternierend unter einem positiven und einem negativen Winkel angestellt sein.

Im zuletzt genannten Fall kann es günstig sein, wenn die Paddel mit positivem Anstellwinkel gegenüber den Paddeln mit negativem Anstellwinkel unterschiedliche Längen haben. Im einfachsten Fall sind die Paddel eben ausgebildet. Eine Alternative besteht darin, den Paddeln eine in sich verschränkte Form zu geben, wodurch das für die Rotation aufzubringende Drehmoment verringert wird.

Nach einem anderen Merkmal der Erfindung stehen die Eintrittskanten der Paddel senkrecht auf dem Wellenkörper, wodurch die Paddel ähnlich einer Pflugschar auf das aufzuschließende Gut eine Hubwirkung ausüben. Wenn jedoch die Austrittskanten der Paddel senkrecht auf dem Wellenkörper stehen, üben die Paddel auf das Gut nur eine Kompressionswirkung aus. Eine Kombination dieser beiden Effekte wird dann erzielt, wenn die Mittellinien der Paddel senkrecht auf dem Wellenkörper stehen.

Um den erwähnten Aufreißeffekt der Paddel an dem sich bildenden Kuchen zu erhöhen, ist es günstig, wenn in den radial äußeren Rand der Paddel radiale Einschnitte eingearbeitet sind.

Weitere Merkmale und Vorteile der Erfindung ergeben sich aus den Schutzansprüchen und aus der folgenden Beschreibung von Ausführungsbeispielen, die in der Zeichnung dargestellt sind. Es zeigen:
Figur 1 eine schematische Perspektivdarstellung einer Förderschnecke, bei der ein Teil der Schneckenwendel als Paddel gemäß der Erfindung ausgebildet ist,
Figur 2 eine Seitenansicht der Förderschnecke der Figur 1 in einer leicht abgeänderten Ausführungsform,
Figur 3 eine Abwicklung eines Axialabschnittes der Förderschnecke gemäß der Erfindung in einer weiteren Ausführungsform,
Figur 4 eine Ansicht eines axialen Abschnittes einer Förderschnecke in einer nochmals abgeänderten Ausführungsform,
Figur 5 eine Variante der Figur 4,
Figur 6 eine weitere Variante der Figur 4,
Figur 7 die Ansicht eines Paddels mit durch Einschnitte gezacktem Rand,
Figur 8 eine Variante der Figur 7,
Figur 9 die Ansicht eines Paddels mit glattem Außenrand und
Figur 10 eine T-förmig ausgebildete Variante der Figur 9.

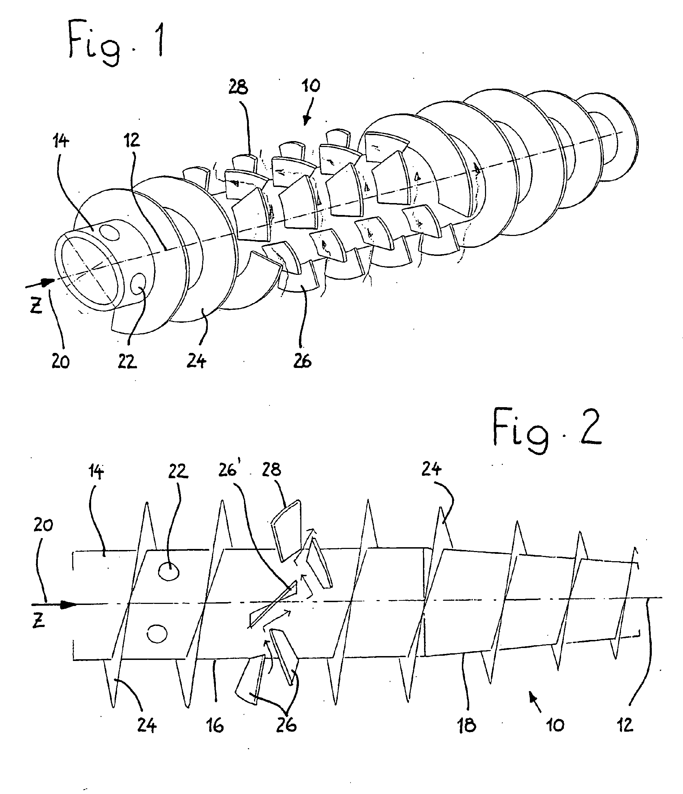

In den Figuren 1 und 2 ist eine Förderschnecke 10 in perspektivischer Ansicht bzw. Seitenansicht gezeigt, die um ihre Längsachse 12 drehbar in einem nicht dargestellten Rotor einer Vollmantel-Dekantierzentrifuge gelagert ist. Die Förderschnecke 10 hat einen hohlen Wellenkörper 14, der aus einem zylindrischen Abschnitt 16 und einem konischen Abschnitt 18 zusammengesetzt ist. Über an sich bekannte und daher nicht weiter dargestellte Mittel wird das aufzuschließende Gut 20 (Fruchtfleisch, Obst, Gemüse oder dergleichen) in Richtung des eingezeichneten Pfeiles Z in den hohlen Wellenkörper 14 geleitet, um anschließend durch Aufgabeöffnungen 22 in den Bereich der Förderschnecke 10 zu gelangen.

Der Wellenkörper 14 der Förderschnecke 10 ist mit Schneckenwendeln 24 bestückt, die das aufzuschließende Gut 20 in Richtung auf den konischen Abschnitt 18 der Förderschnecke 10 transportieren. Hierbei wird aufgrund der Zentrifugalwirkung allmählich die flüssige Phase (Saft) von der Feststoff-Phase des Gutes 20 abgetrennt, so daß am Ende des konischen Abschnittes 18 über nicht weiter dargestellte Austragsöffnungen der weitgehend trockene Feststoff abgegeben wird. Die flüssige Phase - der Saft - kann im Gleichstrom oder im Gegenstrom über ebenfalls nicht weiter dargestellte Austragsöffnungen abgezogen werden.

Gemäß der Erfindung ist vorgesehen, daß - wie in den Figuren 1 und 2 angedeutet - ein Teil der Schneckenwendel 24 als auf Lücke zueinander angeordnete Paddel 26 ausgebildet ist, die das Gut entsprechend den eingezeichneten Pfeilen im Pilgerschrittverfahren vorwärts, d. h. in Richtung auf das Ende des konischen Abschnittes 18, und entgegengesetzt dazu (rückwärts) befördern. Da bei diesem Verfahren das Gut nicht kontinuierlich zu den Austragsöffnungen für den Feststoff bewegt wird, sondern nach einem Vorwärtsschritt wieder einen teilweisen Rückwärtsschritt in die entgegengesetzte Richtung, wird die Verweilzeit in der Dekantierzentrifuge erhöht und gleichzeitig eine Umschichtung bewirkt, was eine bessere Ausnutzung des Fruchtfleisches oder dergleichen und damit eine höhere Saftausbeute zur Folge hat. Da gleichzeitig die radial äußeren Ränder 28 der Paddel 26 den sich an der Innenwand des Rotors absetzenden Fruchtkuchen immer wieder aufreißen, wird die Saftausbeute nochmals verbessert.

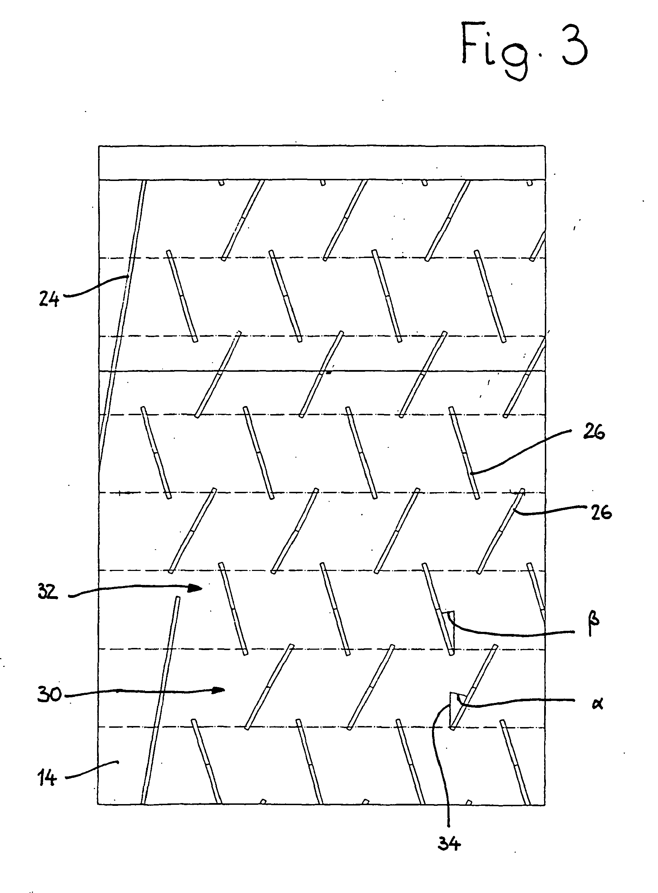

Die in Figur 3 schematisch dargestellte Abwicklung eines axialen Abschnittes der Förderschnecke 10 zeigt, daß die Paddel 26 einer Längsreihe 30 zu den Paddeln 26 der benachbarten Längsreihe 32 unter unterschiedlichen Winkeln α bzw. β zu den Radialebenen 34 ihrer Eintrittskanten angestellt sind. So haben die Winkel α der Paddel 26 der Längsreihe 30 einen positiven Wert, so daß diese das Gut vorwärts befördern, während die Paddel 26 der benachbarten Längsreihe 32 unter einem negativen Winkel β angestellt sind und eine Rückwärtsförderung des Gutes bewirken, bevor dieses wieder von den nächsten Paddeln 26 mit positivem Anstellwinkel α erfasst wird.

In Figur 3 ist am linken Bildrand das Ende der kontinuierlich ausgebildeten Schneckenwendel 24 dargestellt, an das sich die Paddel 26 anschließen.

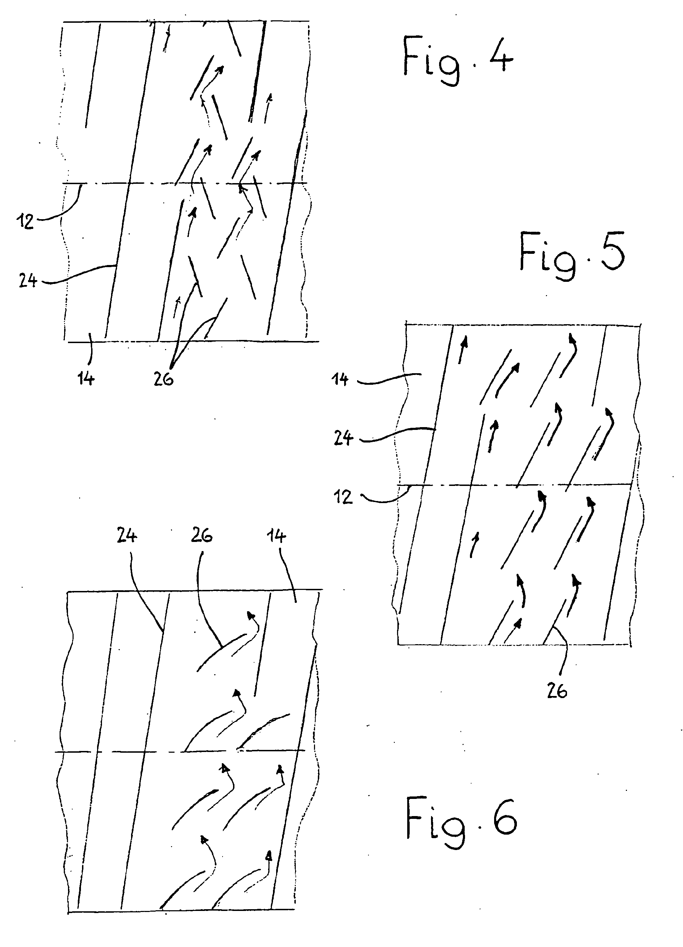

Figur 4 zeigt eine Variante der Figur 3, gemäß welcher zwischen zwei durchgehenden Schneckenwendeln 24 nur auf einem kurzen Axialbereich der Förderschnecke 10 Paddel 26 mit alternierenden Anstellwinkeln α und β angebracht sind.

Beim Beispiel der Figur 5 sind die Paddel 26 zwischen den beiden kontinuierlichen Abschnitten der Schneckenwendeln 24 unter einem gleichbleibenden Winkel angestellt, wobei aufgrund der Lücken zwischen den Paddeln 26 und durch Aufprall des Gutes an den jeweils folgenden Paddeln 26 eine Unterbrechung der Vorwärtsbewegung des Gutes erfolgt. In den Figuren 4 und 5 haben die Paddel 26 eine ebene Form, während beim Beispiel der Figur 6 die Paddel 26 bogenförmig ausgebildet sind.

Eine weitere Möglichkeit ist im mittleren Teil der Figur 2 angedeutet, wo ein Paddel 26' dargestellt ist, das in sich verschränkt ausgebildet ist.

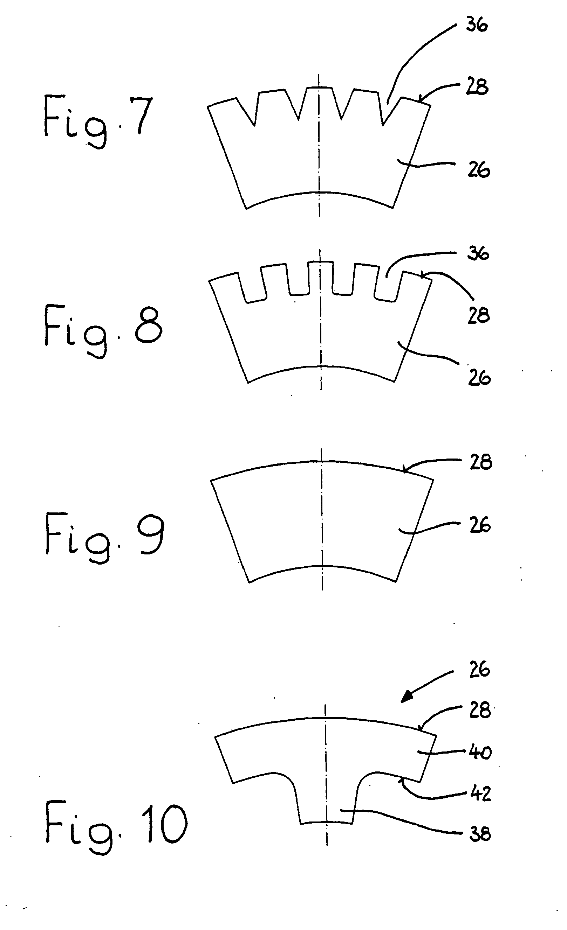

Die Figuren 7 bis 10 zeigen mehrere Möglichkeiten für die Formgebung der Paddel 26. Die einfachste Möglichkeit ist in Figur 9 angedeutet, bei der der radial äußere Rand 28 des Paddels 26 ein Kreissegment ist.

Im Fall der Figuren 7 und 8 ist in den radial äußeren Rand 28 der Paddel 26 eine Reihe von Einschnitten 36 eingearbeitet, die dreieckig (Figur 7) oder rechteckig (Figur 8) ausgebildet sein können. Durch diesen gezackten Rand 28 wird der Aufreißeffekt zur Zerstörung eines an der Innenwand des Rotors sich bildenden Kuchens erhöht.

Figur 10 zeigt eine weitere Möglichkeit, bei der das Paddel 26 T-förmig ausgebildet ist und einen am Wellenkörper 14 zu befestigenden Fuß 38 aufweist, der in einen in Umfangsrichtung breiteren Kopf 40 übergeht, dessen Unterkante 42 zu beiden Seiten des Fußes 38 einen Abstand zum Wellenkörper 14 freiläßt. Hierdurch wird bei Gegenstrombetrieb die Rückströmung des erzeugten Saftes in Richtung auf die Austragsöffnung der Zentrifuge erleichtert.

## Patentansprüche

1. Dekantierzentrifuge für die Gewinnung von Frucht- oder Gemüsesäften mit einer in einem Rotor drehbaren Förderschnecke (10), deren Wellenkörper (14) mit Schneckenwendeln (24) bestückt ist, und mit Mitteln für den Zulauf des aufzuschließenden Gutes (20) sowie mit Austragsöffnungen für die flüssige Phase und den Feststoff, **dadurch gekennzeichnet, daß** wenigstens ein Teil der Schneckenwendel (24) der Förderschnecke (10) als auf Lücke zueinander angeordnete Paddel (26) ausgebildet ist, die relativ zueinander und/oder zu den Schneckenwendeln (24) an ihren Eintrittskanten zu den jeweiligen Radialebenen (34) mit solchen Winkeln ausgestellt sind, daß das aufzuschließende Gut (20) in diskontinuierlicher Pilgerschrittförderung abwechselnd vorwärts und rückwärts bewegt wird.

2. Dekantierzentrifuge nach Anspruch 1, **dadurch gekennzeichnet, daß** die Paddel (26) unter einem i.w. gleichbleibenden Winkel zu den Radialebenen (34) an ihren Eintrittskanten angestellt sind.

3. Dekantierzentrifuge nach Anspruch 1, **dadurch gekennzeichnet, daß** die Paddel (26) zu den Radialebenen (34) an ihren Eintrittskanten in Umfangsrichtung alternierend unter einem positiven und einem negativen Winkel angestellt sind.

4. Dekantierzentrifuge nach Anspruch 3, **dadurch gekennzeichnet, daß** die Paddel (26) mit positivem Anstellwinkel (α) gegenüber den Paddeln (26) mit negativem Anstellwinkel (β) unterschiedliche Längen haben.

5. Dekantierzentrifuge nach einem der vorhergehenden Ansprüche, **dadurch gekennzeichnet, daß** die Paddel (26) eben sind.

6. Dekantierzentrifuge nach einem der Ansprüche 1 bis 4, **dadurch gekennzeichnet, daß** die Paddel (26) verschränkt ausgebildet sind.

7. Dekantierzentrifuge nach einem der vorhergehenden Ansprüche, **dadurch gekennzeichnet, daß** die Eintrittskanten der Paddel (26) senkrecht auf dem Wellenkörper (14) stehen.

8. Dekantierzentrifuge nach einem der Ansprüche 1 bis 6, **dadurch gekennzeichnet, daß** die Austrittskanten der Paddel (26) senkrecht auf dem Wellenkörper (14) stehen.

9. Dekantierzentrifuge nach eine der vorhergehenden Ansprüche, **dadurch gekennzeichnet, daß** die Mittellinien der Paddel (26) senkrecht auf dem Wellenkörper (14) stehen.

10. Dekantierzentrifuge nach einem der vorhergehenden Ansprüche, **dadurch gekennzeichnet, daß** der radial äußere Rand (28) der Paddel (26) ein Kreissegment ist.

11. Dekantierzentrifuge nach einem der Ansprüche 1 bis 9, **dadurch gekennzeichnet, daß** in den radial äußeren Rand (28) der Paddel (26) radiale Einschnitte (36) eingearbeitet sind.

12. Dekantierzentrifuge nach einem der vorhergehenden Ansprüche, **dadurch gekennzeichnet, daß** die Paddel (26) T-förmig ausgebildet und am Wellenkörper (14) mit einem Fuß (38) befestigt sind, der in einen in Umfangsrichtung breiteren Kopf (40) übergeht, dessen Unterkante (42) zu beiden Seiten des Fußes (38) einen Abstand zum Wellenkörper (14) freiläßt.

## Claims

1. A decantation centrifuge for extracting fruit juices or vegetable juices with a screw conveyor (10) which is rotatable in a rotor and the shaft body (14) of which is provided with screw helices (24), and with means for the supply of the material (20) to be broken down as well as with discharge openings for the liquid phase and the solid, **characterized in that** at least part of the screw helices (24) of the screw conveyor (10) are constructed in the form of paddles (26) which are arranged in a staggered manner with respect to one another and which are laid out relative to one another and/or with respect to the screw helices (24) at their leading edges with respect to the respective radial planes (34) at angles such that the material (20) to be broken down is moved backwards and forwards in an alternating manner in a discontinuous step-back conveying.

2. A decantation centrifuge according to Claim 1, **characterized in that** the paddles (26) are set at their leading edges at a substantially constant angle with respect to the radial planes (34).

3. A decantation centrifuge according to Claim 1, **characterized in that** the paddles (26) are set at their leading edges in an alternating manner at a positive and a negative angle with respect to the radial planes (34) in the peripheral direction.

4. A decantation centrifuge according to Claim 3, **characterized in that** the paddles (26) with a positive setting angle (α) have differing lengths as compared with the paddles (26) with a negative setting angle (β).

5. A decantation centrifuge according to any one of the preceding Claims, **characterized in that** the paddles (26) are flat.

6. A decantation centrifuge according to any one of Claims 1 to 4, **characterized in that** the paddles (26) are designed with a twist.

7. A decantation centrifuge according to any one of the preceding Claims, **characterized in that** the leading edges of the paddles (26) are at right angles to the shaft body (14).

8. A decantation centrifuge according to any one of Claims 1 to 6, **characterized in that** the trailing edges of the paddles (26) are at right angles to the shaft body (14).

9. A decantation centrifuge according to any one of the preceding Claims, **characterized in that** the centre lines of the paddles (26) are at right angles to the shaft body (14).

10. A decantation centrifuge according to any one of the preceding Claims, **characterized in that** the radially external edge (28) of the paddles (26) is a segment of a circle.

11. A decantation centrifuge according to any one of Claims 1 to 9, **characterized in that** radial indentations (36) are formed in the radially external edge (28) of the paddles (26).

12. A decantation centrifuge according to any one of the preceding Claims, **characterized in that** the paddles (26) are made T-shaped and are fastened to the shaft body (14) with a foot (38) which passes into a head (40) which is wider in the peripheral direction and the lower edge (42) of which leaves a gap with respect to the shaft body (14) on both sides of the foot (38).

## Revendications

1. Centrifugeuse décanteuse pour l'extraction de jus de fruits ou de légumes avec une vis transporteuse (10) pouvant tourner dans un rotor, dont le corps d'arbre (14) est muni d'hélices de vis (24), et avec des moyens pour l'amenée du produit à désagréger (20) ainsi que des orifices de déversement pour la phase liquide et la matière solide, **caractérisée en ce qu'**au moins une partie des hélices (24) de la vis transporteuse (10) est réalisée sous forme de palettes (26) disposées de manière disjointe les unes par rapport aux autres, qui, au niveau de leurs bords d'attaque par rapport aux plans radiaux (34) correspondants, sont orientées les unes par rapport aux autres et/ou par rapport aux hélices de vis (24) selon des angles respectifs, de sorte que le produit à désagréger (20) est remué, en étant transporté à pas de pèlerin de manière discontinue, alternativement vers l'avant et vers l'arrière.

2. Centrifugeuse décanteuse selon la revendication 1, **caractérisée en ce que** les palettes (26) sont placées au niveau de leurs bords d'attaque selon un angle sensiblement constant par rapport aux plans radiaux (34).

3. Centrifugeuse décanteuse selon la revendication 1, **caractérisée en ce que** les palettes (26) sont placées au niveau de leurs bords d'attaque, dans le sens périphérique, alternativement selon un angle positif et un angle négatif par rapport aux plans radiaux (34).

4. Centrifugeuse décanteuse selon la revendication 3, **caractérisée en ce que** les palettes (26) ayant un angle d'attaque positif (α) ont des longueurs différentes par rapport aux palettes (26) ayant un angle d'attaque négatif (β).

5. Centrifugeuse décanteuse selon l'une quelconque des revendications précédentes, **caractérisée en ce que** les palettes (26) sont planes.

6. Centrifugeuse décanteuse selon l'une quelconque des revendications 1 à 4, **caractérisée en ce que** les palettes (26) sont posées en quinconce.

7. Centrifugeuse décanteuse selon l'une quelconque des revendications précédentes, **caractérisée en ce que** les bords d'attaque des palettes (26) sont perpendiculaires au corps d'arbre (14).

8. Centrifugeuse décanteuse selon l'une quelconque des revendications 1 à 6, **caractérisée en ce que** les bords de fuite des palettes (26) sont perpendiculaires au corps d'arbre (14).

9. Centrifugeuse décanteuse selon l'une quelconque des revendications précédentes, **caractérisée en ce que** les lignes médianes des palettes (26) sont perpendiculaires au corps d'arbre (14).

10. Centrifugeuse décanteuse selon l'une quelconque des revendications précédentes, **caractérisée en ce que** le bord extérieur radial (28) des palettes (26) est un segment de cercle.

11. Centrifugeuse décanteuse selon l'une quelconque des revendications 1 à 9, **caractérisée en ce que** des encoches radiales (36) sont usinées dans le bord extérieur radial (28) des palettes (26).

12. Centrifugeuse décanteuse selon l'une quelconque des revendications précédentes, **caractérisée en ce que** les palettes (26) sont réalisées en forme de T et sont fixées au corps d'arbre (14) avec un pied (38) qui devient une tête (40) plus large dans le sens périphérique, tête dont le bord inférieur (42) libère un espace par rapport au corps d'arbre (14) des deux côtés du pied (38).
